# FASCICULE DE BREVET EUROPEEN

(11) **EP 1 110 618 B1**
(45) Date de publication et mention de la délivrance du brevet: **28.04.2004**
(21) Numéro de dépôt: 00403585.3
(22) Date de dépôt: 19.12.2000
(51) Int. Cl.: B05B 7/00, B05B 7/04, B05B 7/06, G01P 13/02

(54) **Installation de pulvérisation pour assainir des aires d'émission de produits ou odeurs incommodants**
Sprühanlage zur Sanierung von Gebieten mit unangenehmen Stoffen oder Gerüchen
Spray installation for sanitizing areas having unpleasant matter or odours

(30) Priorité: 20.12.1999 FR 9916071
(43) Date de publication de la demande: 27.06.2001
(73) Titulaire: EXEL INDUSTRIES, 51200 Epernay (FR)
(72) Inventeur: Ballu, Patrick, 51100 Reims (FR)
(74) Mandataire: Caron, Gérard

(56) Documents cités:
- FR-A- 2 744 039
- FR-A- 2 765 500
- GB-A- 2 153 322
- US-A- 4 882 071

## Description

La présente invention est relative à une installation destinée à pulvériser un fluide assainissant sur une aire de laquelle se dispersent des produits incommodants, notamment malodorants ou dégageant de la poussière comprenant au moins un ensemble assainissant qui comporte:
un dispositif de pulvérisation définissant un axe de pulvérisation et comprenant une buse de pulvérisation,
des moyens pour alimenter ladite buse en fluide assainissant,
des moyens pour orienter la pulvérisation en fonction du vent.

Une telle installation est connue du document GB 2 153 322. Elle comprend un ballon dans les suspentes duquel sont fixées des unités de pulvérisation d'un insecticide. Chaque unité de pulvérisation comprend un support fixé à une suspente et articulées sur ce support des ailes entre lesquelles peut être serré un réservoir de produit munie d'une buse, un mécanisme de commande à distance étant prévu pour déclencher et arrêter la pulvérisation. Les ailes peuvent servir pour orienter la buse en fonction du vent, la suspente étant suffisamment souple pour admettre une certaine torsion lorsque la direction du vent change.

Cependant, lorsqu'en particulier des produits pulvérulents sont déversés sur une aire de stockage, ils dégagent de la poussière qui peut être nocive pour l'environnement. Certains autres produits peuvent dégager des odeurs désagréables, voire des substances gazeuses nocives. On sait limiter les émanations incommodantes de ces produits en les neutralisant avec un liquide de traitement pulvérisé capable d'abattre la poussière et/ou de neutraliser les émanations gazeuses malodorantes ou nocives.

Cependant, l'installation décrite dans l'art antérieur n'est pas appropriée pour pulvériser un liquide de traitement sur une telle aire de stockage avec une efficacité suffisante pour rabattre les poussières, car en raison de la faible capacité des réservoirs, il faudrait les remplacer très souvent. Ainsi, il faudrait interrompre fréquemment la pulvérisation, les poussières nocives pouvant alors librement se disperser.

L'invention vise à fournir une installation de ce type qui soit appropriée pour assainir avec une grande efficacité des aires de stockage d'émission de produits ou odeurs incommodants.

L'invention a donc pour objet une installation présentant les caractéristiques définies dans la revendication 1

Grâce à ces caractéristiques, chaque ensemble assainissant de l'installation est placé au sol et sa buse de pulvérisation peut facilement s'orienter par rapport au vent grâce à son montage à pivotement azimutal sur le support, tandis que le fluide assainissant peut être stocké dans un réservoir terrestre auquel la buse peut être connectée facilement, éventuellement par l'intermédiaire d'une pompe.

Des particularités avantageuses de l'objet de l'invention sont définies dans les sous-revendications.

D'autres caractéristiques et avantages de l'invention apparaîtront au cours de la description qui va suivre, donnée uniquement à titre d'exemple et faite en se référant au dessin annexé sur lequel:
- la figure 1 est une vue en élévation et en coupe d'un ensemble d'assainissement pour une installation de pulvérisation selon l'invention;
- la figure 2 est une vue à grande échelle du détail A de la figure 1;
- la figure 3 est une vue en coupe selon la ligne III-III de la figure 2,
- la figure 4 montre un détail d'une variante de réalisation de l'invention, et
- la figure 5 représente un exemple d'implantation sur une aire d'émission de produits incommodants d'une installation selon l'invention.

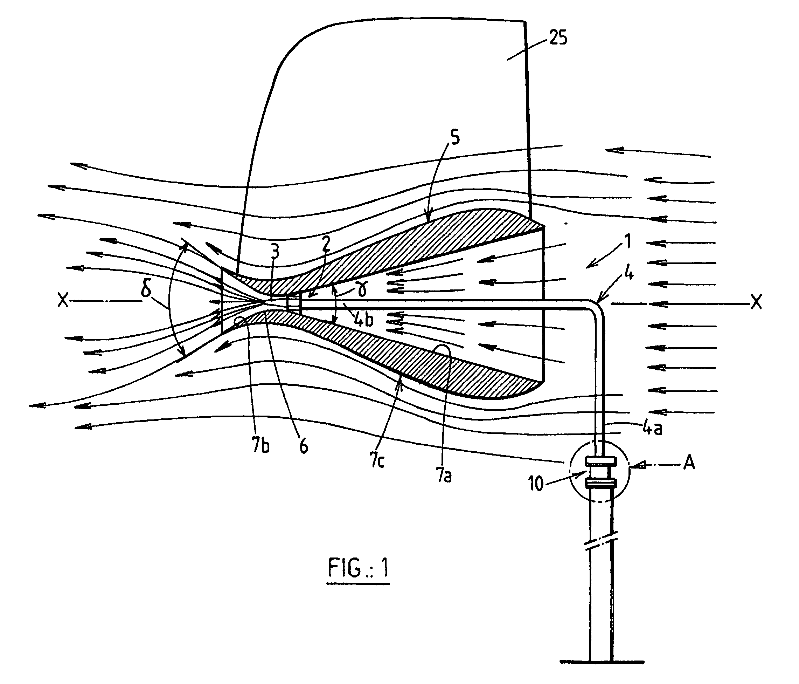

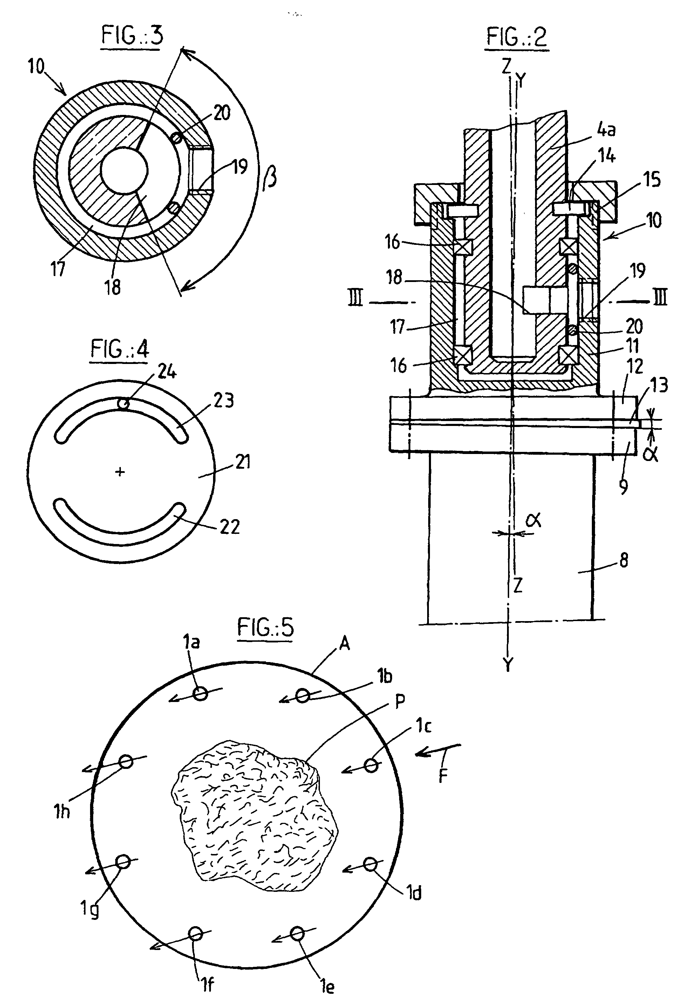

Suivant l'exemple de réalisation représenté aux figures 1 et 3, un ensemble assainissant 1 pour une installation selon l'invention, comprend un dispositif de pulvérisation 2 définissant un axe de pulvérisation X-X. Ce dispositif de pulvérisation 2 comprend une buse de pulvérisation 3 montée sur un embout de tube 4 coudé à angle droit.

Selon une caractéristique avantageuse et préférentielle de l'invention, la buse de pulvérisation 3 est entourée coaxialement par une tuyère convergente-divergente 5 dont le col 6 entoure la buse 3. Par rapport au sens de circulation de l'air autour de la buse 3, la partie convergente 7a de la tuyère est située en amont de la buse, tandis que la partie divergente 7b est située en aval.

Le dispositif de pulvérisation 2 est monté sur des moyens de support 10 comprenant un poteau 8 fixé verticalement dans le sol (axe Y-Y) et présentant une bride de fixation 9 à son extrémité supérieure. La longueur du poteau 8 peut être choisie en fonction de la hauteur du tas du produit incommodant pouvant être déposé sur l'aire.

Dans l'exemple représenté sur les figures 1 à 3, les moyens de support 10 assurent à la fois la fixation mécanique sur le poteau 8 du dispositif de pulvérisation 2 et la connexion hydraulique de ce dernier à une source de fluide assainissant terrestre (non représentée). En outre, les moyens de support 10 assurent un pivotement azimutal du dispositif de pulvérisation 2.

A cet effet, dans le présent exemple, les moyens de support 10 comprennent une pièce 11 en forme de cloche inversée qui est munie d'une bride de fixation 12 à son extrémité inférieure. Cette bride 12 est rapportée sur la bride de fixation 9 du poteau 8 avec interposition d'une cale annulaire 13 qui présente une épaisseur non uniforme, ses faces radiales faisant un faible angle α entre elles. Il en résulte que l'axe Z-Z de la branche descendante 4a de l'embout coudé 4 est incliné d'un angle α par rapport à la verticale, c-à-d. l'axe Y-Y du poteau 8. L'angle □ peut être de quelques degrés.

La branche descendante 4a de l'embout 4 est engagée à pivotement dans la pièce 11. Elle y est retenue par un circlips 14 prenant appui sur le bord radial interne d'un bouchon 15 vissé sur la pièce 11. Deux joints toriques 16 délimitent une chambre annulaire 17 dans la pièce 11.

La branche descendante 4a présente également une fente radiale 18 qui s'étend sur un arc β de 120° environ (figure 2) et débouche dans la chambre annulaire 17. Par rapport à l'axe Z-Z, cette fente 18 est diamétralement opposée à la buse de pulvérisation 3 et elle est destinée à coopérer avec un orifice d'entrée 19 pratiqué dans la paroi de la pièce 11. Cette disposition permet de mettre la chambre annulaire 17 en communication, par un raccord vissé ou à enclenchement rapide, avec une canalisation d'alimentation (non représentée) venant de la source de fluide assainissant. Le bord interne de l'orifice d'entrée 19 est entouré d'un joint torique 20 venant établir l'étanchéité sur la surface externe de l'embout 4.

Alors que dans le mode de réalisation des figures 1 à 3, le raccordement de la source de fluide ainsi que le passage réglable vers le tube coudé 4 sont essentiellement orientés radialement, il est également envisageable de concevoir une orientation de ces éléments essentiellement axialement.

La figure 4 montre un détail d'un tel agencement axial qui est basé sur le principe bien connu des robinets mitigeurs utilisés en plomberie dans lesquels on utilise un ou deux disques ayant une face d'une planéité très poussée (disques miroirs en céramique, par exemple). Ainsi, sur cette figure 4 on a montré un tel disque 21 présentant deux fentes 22 et 23 en forme de haricot placées ici dans des positions diamétralement opposées. Le cercle 24 symbolise un tube d'arrivée de fluide à pulvériser débouchant en dessous du disque 21.

Le disque 21 est placé de manière que son axe soit vertical (par exemple coaxial au tube 4). Dans ces conditions on peut avantageusement faire passer le tube d'arrivée de fluide 24 dans le poteau, l'alimentation pouvant alors se faire par le sol. La cale 13 de la figure 2 peut être omise et le poteau 1 être légèrement incliné.

Dans ces conditions, un agencement avantageux pourrait consister à monter le disque 21 dans l'extrémité inférieure du tube 4 qui, de son côté, serait ajusté dans la cloche 11, le tube 24 étant en contact du disque 21 en passant à travers le fond de celui-ci.

Cette variante de la figure 4 pourrait encore être modifiée en prévoyant deux disques rodés superposés ayant chacun des fentes situés sur des cercles de même diamètre. Une rotation relative de tels disques permettrait alors de déterminer au choix " un angle sur lequel la pulvérisation serait active.

La forme de la tuyère convergente-divergente 5 est de préférence celle représentée sur la figure 1. On voit que la partie convergente 7a par laquelle l'air doit entrer pendant le fonctionnement, présente une forme tronconique d'angle y dont la valeur est choisie de préférence entre 20 et 90 degrés, une valeur préférentielle étant située entre 50 et 70 degrés. Ces valeurs sont choisies dans le but d'éviter à l'extérieur de la tuyère 5 des turbulences ou un décollement de filets d'air s'écoulant autour de la tuyère.

La partie divergente 7b présente une forme tronconique définissant un angle d'ouverture δ supérieur à l'angle γ. La valeur de cet angle est située, de préférence, entre 40 et 120 degrés, une valeur appropriée étant 60 degrés.

La longueur de la tuyère 5 est choisie de telle manière qu'une accélération aussi importante que possible puisse être obtenue du flux d'air passant dans la tuyère. On obtient ainsi une portée aussi importante que possible de la pulvérisation. Le rapport de la longueur axiale de la partie convergente 7a à celle de la partie divergente 7b est de préférence choisie entre 1 à 2 et 1 à 8, une valeur de 1 à 3 étant préférée.

Quant à la surface externe 7c de la tuyère 5, elle est profilée soigneusement pour éviter les turbulences des filets d'air passant le long de cette surface et également pour atteindre un recollement tangentiel de l'ensemble des filets d'air à la sortie de la partie divergente 7b.

Lorsque le vent souffle selon une direction correspondant à un certain angle azimutal englobé par l'ouverture de la partie convergente 7a de la tuyère 5, celle-ci joue trois rôles essentiels.

En premier lieu, du fait de sa forme et comme décrit dans FR 2 744 039, elle permet de transformer les gouttelettes sortant de la buse 3 en des micro-bulles, augmentant ainsi l'efficacité du fluide assainissant.

En second lieu, l'ensemble du dispositif de pulvérisation 2, du fait de son montage à pivot azimutal, s'oriente de manière que l'axe X-X coïncide avec la direction du vent.

En troisième lieu, par l'accélération qu'elle provoque du flux d'air la traversant, elle contribue à augmenter la portée de la pulvérisation.

Par ailleurs, la buse de pulvérisation 3, ainsi que la tuyère 5 étant montées à l'extrémité de la branche quasi-horizontale 4b de l'embout coudé 4, le centre de gravité du dispositif de pulvérisation 2 est déporté par rapport à l'axe de pivotement Z-Z de ce dernier. Ainsi, du fait de son montage incliné sur la verticale et de son porte-à-faux par rapport au poteau 8, le dispositif de pulvérisation 2 prend naturellement une position azimutale déterminée. Il est alors possible d'implanter l'ensemble d'assainissement 1 sur le terrain de telle façon que cette position azimutale déterminée coïncide avec une direction préférentielle de pulvérisation.

Par ailleurs, du fait de l'opposition diamétrale par rapport à l'axe Z-Z de la fente 17 et de la tuyère 5, la position azimutale déterminée correspondra toujours à la position d'ouverture de l'obturateur de fluide formé dans la monture 11 par la fente 18 et l'orifice d'entrée 19, comme le représentent les figures 2 et 3. Par contre, si la direction du vent s'écarte de la direction des vents correspondant à l'ouverture totale, d'un certain angle de part et d'autre (déterminé par la demi-angle formé par la fente 18), l'obturateur sera fermé, évitant ainsi un gaspillage de fluide assainissant.

Le dispositif de pulvérisation 2 peut comprendre avantageusement une aile 25 formée par une plaque de tôle verticale fixée par exemple sur la partie supérieure de la tuyère convergente-divergente 5. Grâce à cette aile verticale 25, l'ensemble du dispositif de pulvérisation 2 fonctionne à la façon d'une girouette assurant ainsi une orientation irréprochable en fonction de la direction du vent en renforçant l'effet d'orientation assuré par la tuyère 5.

La figure 5 illustre schématiquement, sans respecter l'échelle, une aire A ici de forme circulaire sur laquelle est déposé un produit P dégageant de la poussière ou produisant des émanations de gaz incommodants. Dans cet exemple, l'installation de pulvérisation comporte huit ensembles assainissants 1a à 1h répartis régulièrement autour de l'aire A. Les centres de gravité des dispositifs de pulvérisation 2 de ces ensembles 1a à 1h sont déportés par rapport à l'axe de leur poteau de support 8 de telle façon que les sorties des buses 3 soient orientées vers l'intérieur de l'aire de stockage. Ainsi, le tas de produit incommodant P peut être balayé par le fluide assainissant pulvérisé par un certain nombre d'ensembles de pulvérisation quelle que soit l'orientation du vent. Par exemple si le vent souffle dans le sens de la flèche F, comme représenté, les ensembles 1b, 1c et 1d peuvent assurer le travail d'assainissement, les autres éléments étant alors dépourvus d'alimentation en fluide assainissant (par exemple par fermeture d'un obturateur placé dans le canal d'alimentation de l'élément concerné).

Toutefois, on peut aussi souhaiter pulvériser du fluide assainissant dans une zone (par exemple une zone d'habitation) située hors de l'aire d'émission. Dans ce cas, on peut faire en sorte que les éléments de pulvérisation se trouvant du côté de cette zone aient une orientation naturelle qui y soit dirigée.

Par exemple, si la zone se trouve à gauche de l'aire de stockage, comme vu sur la figure 5, les éléments 1a, 1e, 1f, 1g et 1h pourront avoir une orientation naturelle vers la gauche et balayer ainsi la zone concernée si le vent souffle dans le sens F.

Bien entendu, les configuration de pulvérisation décrites ne sont nullement limitatives, la mise en oeuvre de l'installation dépendant fortement des conditions locales et de la direction des vents dominants.

## Revendications

1. Installation pour pulvériser un fluide assainissant sur une aire (A) de laquelle se dispersent des produits incommodants (P), notamment malodorants ou dégageant de la poussière, comprenant au moins un ensemble assainissant (1; 1a à 1f) qui comporte:
un dispositif de pulvérisation (2) définissant un axe de pulvérisation (X-X) et comprenant une buse de pulvérisation (3)
des moyens (4, 17, 18, 19) pour alimenter ladite buse en fluide assainissant, et
des moyens (5, 21) pour orienter la pulvérisation en fonction du vent,
cette installation étant **caractérisée en ce que** ledit ensemble assainissant comprend également des moyens de support (10) fixes par rapport au sol et agencés de manière à permettre un pivotement azimutal du dispositif de pulvérisation (2), et
**en ce que** ladite buse de pulvérisation (3) est raccordée à une source de fluide assainissant terrestre.

2. Installation suivant la revendication 1, **caractérisée en ce que** lesdits moyens pour orienter la pulvérisation en fonction du vent comprennent une tuyère (5) convergente-divergente dans le col (6) de laquelle est placée ladite buse (3) de manière à pulvériser le fluide assainissant hors de la partie divergente (7b) de ladite tuyère (5).

3. Installation suivant la revendication 2, **caractérisée en ce que** l'angle d'ouverture (y) de la partie convergente (7a) de ladite tuyère (5) est choisi entre 20 et 90 degrés, et est de préférence de 50 à 70 degrés.

4. Installation suivant l'une quelconque des revendications 2 et 3, **caractérisée en ce que** l'angle d'ouverture (δ) de la partie divergente (7b) de ladite tuyère est choisi entre 40 et 120 degrés, et est de préférence de 60 degrés.

5. Installation suivant l'une quelconque des revendications 2 à 4, **caractérisée en ce que** le rapport des longueurs axiales des parties convergente et divergente (7a, 7b) est choisi entre 1 à 2 et 1 à 8, et est de préférence de 1 à 3.

6. Installation suivant l'une quelconque des revendications 2 à 5, **caractérisée en ce que** la surface extérieure (7c) de ladite tuyère (5) est profilée de manière à assurer une absence de turbulences autour de toute la longueur de la tuyère, ainsi qu'un recollement tangentiel des filets d'air balayant cette surface extérieure (7c) à la sortie de la partie divergente (7b) de la tuyère (5).

7. Installation suivant l'une quelconque des revendications 1 à 6, **caractérisée en ce que** lesdits moyens pour orienter la pulvérisation comprennent en outre une plaque plane (25) solidaire dudit dispositif de pulvérisation (2) et disposée dans un plan vertical contenant l'axe de pulvérisation (X-X).

8. Installation suivant l'une quelconque des revendications précédentes, **caractérisée en ce que** lesdits moyens de support comprennent un poteau (8) fixé dans le sol et à l'extrémité supérieure duquel est monté pivotant ledit dispositif de pulvérisation (2).

9. Installation suivant la revendication 8, **caractérisée en ce que** l'axe de pivotement (Z-Z) dudit dispositif de pulvérisation (2) est légèrement incliné sur la verticale (Y-Y) et **en ce que** son centre de gravité est déporté par rapport à cet axe de pivotement (Z-Z).

10. Installation suivant l'une quelconque des revendications précédentes, **caractérisée en ce que** lesdits moyens de support (10) définissent un orifice d'entrée (19; 24) de fluide assainissant et comprennent des moyens formant obturateur (4, 16, 17, 18; 21 à 23) interposés entre ledit orifice d'entrée (19; 24) et ladite buse (3) et faisant communiquer cet orifice et cette buse en fonction de la position azimutale dudit dispositif de pulvérisation (2).

11. Installation suivant les revendications 9 et 10, **caractérisée en ce que** ledit obturateur (4, 16, 17, 18; 21 à 23) est agencé pour établir ladite communication dans une plage prédéterminée de positions azimutales.

12. Installation suivant la revendication 11, **caractérisée en ce que** ledit obturateur (21 à 24) comprend au moins un disque miroir utilisé à la façon d'un robinet mitigeur.

13. Installation suivant l'une quelconque des revendications 11 et 12, **caractérisée en ce que** ledit dispositif de pulvérisation (2) comprend un embout de tube coudé (4) formant canalisation pour le fluide à pulvériser et portant au bout de l'une (4b) de ses branches ladite buse (3) et ladite tuyère (5), l'autre branche (4a) de cet embout étant engagé dans lesdits moyens de support (10) en étant coaxial audit axe de pivotement (Z-Z).

14. Installation suivant les revendications 11 et 13, **caractérisée en ce que** lesdits moyens de support (10) comprennent une pièce en forme de cloche inversée (11) dans laquelle est engagée la branche correspondante (4a) dudit embout de tube (4) qui y forme une chambre de fluide annulaire (17) communiquant en vue de former ledit obturateur, d'une part avec un orifice d'entrée de fluide (19) à connecter à une source de fluide assainissant et d'autre part avec ledit embout (4) à travers une fente radiale (18) pratiquée dans l'extrémité libre de ladite branche (4a).

15. Installation suivant l'une quelconque des revendications précédentes, **caractérisée en ce qu'**elle est placée sur une aire d'émission d'un produit incommodant et il est prévu au moins un ensemble de pulvérisation dont le dispositif de pulvérisation a un centre de gravité situé par rapport à son axe de pivotement du côté aval du sens des vents dominants.

## Patentansprüche

1. Anlage zum Versprühen einer sanierenden Flüssigkeit auf ein Gebiet (A), von dem aus sich unangenehme, namentlich übelriechende oder Staub freisetzende Produkte (P) verbreiten, umfassend mindestens eine Einheit zur Sanierung (1; la bis 1f), welche beinhaltet:
- eine Sprühvorrichtung (2), die eine Sprühachse definiert (X-X) und eine Sprühdüse (3) umfasst.
- Mittel (4, 17, 18, 19) zum Versorgen dieser Düse mit sanierender Flüssigkeit, und
- Mittel (5, 21) um das Versprühen in Abhängigkeit vom Wind auszurichten,
wobei diese Anlage **dadurch gekennzeichnet ist, dass** die Einheit zum Sanieren ebenfalls Stützmittel (10) umfasst, die in Bezug auf den Boden feststehen und so ausgestaltet sind, dass sie eine Verschwenkung der Sprühvorrichtung (2) in der Waagrechten gestatten und
dass die Sprühdüse (3) mit einer Quelle für eine sanierende Flüssigkeit im Boden verbunden ist.

2. Anlage gemäß Anspruch 1, **dadurch gekennzeichnet, dass** die Mittel zum Ausrichten des Versprühens in Abhängigkeit vom Wind ein zusammenlaufendes und sich erweiterndes Strahlrohr (5) aufweisen, in dessen engster Stelle (6) sich die Düse (3) befindet, so dass die sanierende Flüssigkeit aus dem sich erweiternden Teil (7b) des Strahlrohres (5) heraus versprüht wird.

3. Anlage gemäß Anspruch 2, **dadurch gekennzeichnet, dass** der Öffnungswinkel (γ) des zusammenlaufenden Teils (7a) des Strahlrohrs (5) zwischen 20 und 90 Grad ausgewählt ist, und vorzugsweise von 50 bis 70 Grad beträgt.

4. Anlage gemäß irgendeinem der Ansprüche 2 und 3, **dadurch gekennzeichnet, dass** der Öffnungswinkel (δ) des sich erweiternden Teils (7b) des Strahlrohrs zwischen 40 und 120 Grad ausgewählt ist, und vorzugsweise 60 Grad beträgt.

5. Anlage gemäß irgendeinem der Ansprüche 2 bis 4, **dadurch gekennzeichnet, dass** das Verhältnis der axialen Längen von zusammenlaufendem und sich erweiterndem Teil (7a, 7b) zwischen 1 zu 2 und 1 zu 8 ausgewählt ist und vorzugsweise 1 zu 3 ist.

6. Anlage gemäß irgendeinem der Ansprüche 2 bis 5, **dadurch gekennzeichnet, dass** die äußere Oberfläche (7c) des Strahlrohres (5) so profiliert ist, dass eine Abwesenheit von Turbulenzen um die gesamte Länge des Strahlrohres herum gewährleistet ist, ebenso wie eine Rückführung in tangentiale Richtung der diese äußere Oberfläche (7c) am Ausgang des sich erweiternden Teils (7b) des Strahlrohres (5) bestreichenden Luftströmung.

7. Anlage gemäß irgendeinem der Ansprüche 1 bis 6, **dadurch gekennzeichnet, dass** die Mittel zum Ausrichten des Versprühens außerdem eine ebene Platte (25) umfassen, die mit der Sprühvorrichtung (2) zusammenhängt und in einer die Sprühachse (X-X) enthaltenden senkrechten Ebene angeordnet ist.

8. Anlage gemäß irgendeinem der vorhergehenden Ansprüche, **dadurch gekennzeichnet, dass** die Stützmittel einen im Boden befestigten Pfahl umfassen, auf dessen oberem Ende die Sprühvorrichtung (2) schwenkbar gelagert ist.

9. Anlage gemäß Anspruch 8, **dadurch gekennzeichnet, dass** die Verschwenkungsachse (Z-Z) der Sprühvorrichtung (2) leicht gegen die Senkrechte (Y-Y) geneigt ist und dass ihr Schwerpunkt in Bezug auf diese Verschwenkungsachse (Z-Z) verschoben ist.

10. Anlage gemäß irgendeinem der vorhergehenden Ansprüche, **dadurch gekennzeichnet, dass** die Stützmittel (10) eine Einlassöffnung (19; 24) für sanierende Flüssigkeit definieren und einen Verschluss (4, 16, 17, 18; 21 bis 23) bildende Mittel enthaltend, die zwischen der Einlassöffnung (19; 24) und der Düse (3) eingeschaltet sind und die diese Öffnung und diese Düse in Abhängigkeit von der Stellung der Sprühvorrichtung (2) in der Waagrechten in Verbindung stehen lassen.

11. Anlage gemäß den Ansprüchen 9 und 10, **dadurch gekennzeichnet, dass** der Verschluss (4, 16, 17, 18; 21 bis 23) so ausgestaltet ist, dass er die Verbindung in einem vorbestimmten Bereich der Stellungen in der Waagrechten herbeiführt.

12. Anlage gemäß Anspruch 11, **dadurch gekennzeichnet, dass** der Verschluss (21 bis 24) mindestens eine Prallscheibe umfasst, die in der Art eines Mischventils verwendet wird.

13. Anlage gemäß irgendeinem der Ansprüche 11 und 12, **dadurch gekennzeichnet, dass** die Sprühvorrichtung (2) ein gekrümmtes Rohrstück (4) umfasst, das die Leitungsröhre für die zu versprühende Flüssigkeit bildet und am Ende des einen (4b) seiner Schenkel die Düse (3) und das Strahlrohr (5) trägt, wobei der andere Schenkel (4a) dieses Rohrstücks in den Stützmitteln (10) steckt und zu der Schwenkungsachse (Z-Z) koaxial ist.

14. Anlage gemäß den Ansprüchen 9 und 10, **dadurch gekennzeichnet, dass** die Stützmittel (10) ein Stück in Form einer umgedrehten Glocke (11) enthalten, in dem der zugeordnete Schenkel (4a) des Rohrstücks (4) steckt, das dort eine ringförmige Flüssigkeitskammer (17) bildet, die um diesen Verschluss zu bilden einesteils mit einer Einlassöffnung für Flüssigkeit (19), die mit einer Quelle für sanierende Flüssigkeit verbindbar ist, und andererseits über einen radialen Schlitz (18), der in das freie Ende des Schenkels (4a) eingearbeitet ist, mit dem Rohrstück (4) in Verbindung steht.

15. Anlage gemäß irgendeinem der vorhergehenden Ansprüche, **dadurch gekennzeichnet, dass** sie auf einem Gebiet untergebracht ist, wo ein unangenehmes Produkt freigesetzt wird, und mindestens eine Sprüheinheit vorgesehen ist, deren Sprühvorrichtung einen Schwerpunkt hat, der bezüglich seiner Schwenkachse auf der von der Richtung der vorherrschenden Winde abgewandten Seite liegt.

## Claims

1. An installation for spraying a cleaning fluid onto an area (A) from which are dispersed offensive products (P), in particular malodorous products or products giving off dust, said installation comprising at least one cleaning assembly (1, 1a to 1f) that comprises:
a sprayer device (2) defining a spraying axis (X-X) and comprising a spray nozzle (3),
means (4, 17, 18, 19) for supplying said nozzle with cleaning fluid, and
means (5, 21) for orienting the spray as a function of the wind,
and said installation being **characterized in that**:
said cleaning assembly also comprises support means (10) fixed relative to the ground and adapted to allow pivoting of the sprayer device (2) in azimuth, and
said spray nozzle (3) is connected to a cleaning fluid source on the ground.

2. An installation according to claim 1, **characterized in that** said means for orienting the spray as a function of the wind comprise a convergent-divergent duct (5) in the neck (6) of which said nozzle (3) is placed so as to spray the cleaning fluid out of the divergent portion (7b) of said duct (5).

3. An installation according to claim 2, **characterized in that** the aperture angle (γ) of the convergent part (7a) of said duct (5) is from 20 to 90° and preferably from 50 to 70°.

4. An installation according to either claim 2 or claim 3, **characterized in that** the aperture angle (δ) of the divergent portion (7b) of said duct is from 40 to 120° and preferably 60°.

5. An installation according to any one of claims 2 to 4, **characterized in that** the ratio of the axial lengths of the convergent and divergent portions (7a, 7b) is from 1:2 to 1:8 and is preferably 1:3.

6. An installation according to any one of claims 2 to 5, **characterized in that** the exterior surface (7c) of said duct (5) is profiled to assure absence of turbulence around the whole length of the duct and tangential reattachment of the air streams sweeping said exterior surface (7c) at the exit from the divergent portion (7b) of the duct (5).

7. An installation according to any one of claims 1 to 6, **characterized in that** said means for orienting the spray further comprise a plane plate (25) fastened to said sprayer device (2) and disposed in a vertical plane containing the spraying axis (X-X).

8. An installation according to any preceding claim, **characterized in that** said support means comprise a post (8) fixed into the ground and at the upper end of which said sprayer device (2) is pivotably mounted.

9. An installation according to claim 8, **characterized in that** the pivot axis (Z-Z) of said sprayer device (2) is slightly inclined to the vertical (Y-Y) and its center of gravity is offset relative to said pivot axis (Z-Z).

10. An installation according to any preceding claim, **characterized in that** said support means (10) define a cleaning fluid inlet orifice (19; 24) and comprise obturator means (4, 16, 17, 18; 21 to 23) disposed between said inlet orifice (19;24) and said nozzle (3) and establishing communication between said orifice and said nozzle as a function of the position in azimuth of said sprayer device (2).

11. An installation according to claims 9 and 10, **characterized in that** said obturator means (4, 16, 17, 18; 21 to 23) establish said communication over a predetermined range of positions in azimuth.

12. An installation according to claim 11, **characterized in that** said obturator means (21 to 24) comprise at least one mirror disc used in the manner of a mixer tap.

13. An installation according to either claim 11 or 12, **characterized in that** said sprayer device (2) comprises an angled tube end-piece (4) forming a pipe for the fluid to be sprayed and carrying said nozzle (3) and said duct (5) at the end of one of its branches (4b), the other branch (4a) of said end-piece being engaged in said support means (10) and coaxial with said pivot axis (Z-Z).

14. An installation according to claims 11 and 13, **characterized in that** said support means (10) comprise an inverted bell-shaped member (11) in which the corresponding branch (4a) of said tube end-piece (4) is engaged and forms therein an annular fluid chamber (17) communicating, in order to form said obturator means, firstly with a fluid inlet orifice (19) adapted to be connected to a cleaning fluid source and secondly with said end-piece (4) via a radial slot (18) formed in the free end of said branch (4a).

15. An installation according to any preceding claim, **characterized in that** it is placed in an area in which an offensive product is emitted and at least one sprayer assembly is provided whose sprayer device has a center of gravity situated on the predominantly downwind side of its pivot axis.
